# FASCICULE DE BREVET EUROPEEN

(11) **EP 1 243 001 B1**
(45) Date de publication et mention de la délivrance du brevet: **12.07.2006**
(21) Numéro de dépôt: 00985429.0
(22) Date de dépôt: 13.12.2000
(51) Int. Cl.: G21F 9/00, G21C 17/06

(54) **DISPOSITIF DE NETTOYAGE D'UN ASSEMBLAGE DE COMBUSTIBLE D'UN REACTEUR NUCLEAIRE**
VORRICHTUNG ZUR REINIGUNG EINES KERNREAKTOR-BRENNELEMENTS
DEVICE FOR CLEANING A NUCLEAR REACTOR FUEL ASSEMBLY

(30) Priorité: 24.12.1999 FR 9916493
(43) Date de publication de la demande: 25.09.2002
(73) Titulaire: Framatome ANP, 92400 Courbevoie (FR)
(72) Inventeur: LEROY, Gabriel, F-69005 Lyon (FR)
(74) Mandataire: Bouget, Lucien
(86) Numéro de dépôt international: PCT/FR2000/003509
(87) Numéro de publication internationale: WO 2001/048760

(56) Documents cités:
- EP-A- 0 281 680
- EP-A- 0 373 936
- EP-A- 0 615 792
- WO-A-98/53464
- DE-A- 4 129 362
- JP-A- 56 044 899
- US-A- 4 461 650
- US-A- 4 847 042

## Description

L'invention conceme un dispositif de nettoyage d'un assemblage de combustible d'un réacteur nucléaire et en particulier d'un assemblage de combustible d'un réacteur nucléaire refroidi par de l'eau sous pression.

Les assemblages de combustible des réacteurs nucléaires refroidis à l'eau légère, et en particulier les assemblages de combustible des réacteurs nucléaires à eau sous pression sont constitués sous la forme de faisceaux de crayons de combustible qui sont maintenus dans une ossature de l'assemblage de combustible dans des dispositions parallèles entre elles. Les crayons de combustible sont eux-mêmes constitués par des tubes de grande longueur, généralement d'une longueur un peu supérieure à quatre mètres et d'un diamètre de l'ordre d'un centimètre, remplis par des pastilles de combustible. Les crayons de combustible sont disposés dans l'ossature de l'assemblage de combustible, de manière à ménager entre eux des espaces de circulation d'eau de refroidissement du réacteur nucléaire. L'eau de refroidissement du réacteur nucléaire circule dans les espaces entre les crayons, dans la direction axiale du faisceau suivant laquelle sont disposés les crayons.

Les assemblages de combustible sont disposés dans le coeur du réacteur nucléaire, avec leurs axes verticaux, de manière à être traversés par l'eau de refroidissement du réacteur nucléaire circulant de bas en haut, entre leur partie inférieure reposant sur une plaque de support de coeur du réacteur nucléaire et leur partie supérieure sur laquelle vient reposer une plaque supérieure de coeur assurant le maintien des assemblages de combustible.

Après un certain temps de fonctionnement du réacteur nucléaire, il est nécessaire d'effectuer un rechargement du coeur du réacteur en remplaçant une partie des assemblages de combustible qui ont séjourné dans le coeur pendant une durée déterminée ou qui ont subi un taux de combustion prédéterminé ou encore les assemblages de combustible qui sont détériorés et qui peuvent être responsables de rejets de produits radioactifs dans l'eau de refroidissement du réacteur.

Les assemblages usagés déchargés du coeur du réacteur nucléaire sont généralement transportés et stockés dans une piscine de désactivation installée au voisinage du bâtiment du réacteur nucléaire.

A l'intérieur de la piscine de désactivation, les assemblages de combustible sont stockés sous eau dans des râteliers de stockage reposant sur le fond de la piscine de désactivation. Les râteliers de stockage délimitent un ensemble de cellules verticales de forme prismatique droite ayant une hauteur au moins égale à la longueur axiale d'un assemblage de combustible, destinées à recevoir chacune un assemblage de combustible dans une disposition dans laquelle l'axe longitudinal de l'assemblage de combustible est vertical. L'assemblage de combustible est déposé dans la cellule du râtelier de stockage, dans une position analogue à sa position dans le coeur du réacteur nucléaire, c'est-à-dire avec sa partie d'extrémité inférieure, ou embout inférieur, reposant dans le fond de la cellule du râtelier et avec sa partie supérieure, ou embout supérieur, à l'extrémité supérieure du râtelier de stockage. La profondeur de la piscine de désactivation est telle que la partie supérieure des assemblages de combustible soit surmontée par une hauteur d'eau suffisante pour assurer la protection biologique du personnel travaillant au niveau du bord supérieur de la piscine. L'ossature de l'assemblage de combustible comporte des embouts d'extrémité (inférieur et supérieur) et des grilles-entretoises transversales de maintien des crayons réparties suivant la direction longitudinale de l'assemblage de combustible, ces éléments étant reliés entre eux par des tubes-guides qui sont placés dans certaines positions en remplacement de crayons, à l'intérieur du faisceau. Les éléments de l'ossature tels que les grilles-entretoises et les embouts délimitent avec les crayons de combustible de nombreux interstices de faible dimension. De même, les espaces entre les crayons de combustible présentent des dimensions relativement faibles dans les sections transversales de l'assemblage de combustible. L'eau de refroidissement du réacteur nucléaire est susceptible de transporter des débris formés de métaux ou d'oxydes qui sont activés et qui peuvent se fixer dans les interstices entre les éléments de l'ossature et les crayons de combustible ou entre les crayons de combustible.

Il peut être nécessaire de nettoyer les assemblages de combustible usagés extraits du coeur d'un réacteur nucléaire, pour enlever des débris restés accrochés entre l'ossature et les crayons de combustible ou entre les crayons de combustible, avant de recharger l'assemblage de combustible ou avant de le transporter, par exemple dans un stand d'inspection et de réparation ou dans une usine de retraitement. En effet, les débris restés accrochés dans l'assemblage de combustible sont susceptibles de se détacher pendant le transport ou pendant les opérations effectuées sur l'assemblage de combustible usagé, de sorte que ces débris, fortement activés, peuvent être responsables de contaminations non souhaitables. Dans le cas où l'on recharge l'assemblage de combustible dans le coeur du réacteur sans l'avoir nettoyé, on produit une augmentation de l'activité dans le circuit primaire.

On connaît par les DE-A-4 129 362 et US-A-4,847,042, des procédés et dispositifs permettant de nettoyer un assemblage de combustible, par injection et aspiration d'eau dans un boîtier dans lequel on déplace l'assemblage de combustible, à l'intérieur d'une piscine.

Cependant, on ne connaissait pas jusqu'ici de dispositif permettant de réaliser facilement et de manière efficace le nettoyage d'assemblages de combustible usagés extraits du coeur d'un réacteur nucléaire et placés dans un râtelier de stockage à l'intérieur d'une piscine.

Le but de l'invention est donc de proposer un dispositif de nettoyage d'un assemblage de combustible d'un réacteur nucléaire constitué par un faisceau de crayons de combustible maintenus dans des dispositions parallèles entre elles à l'intérieur d'une ossature de l'assemblage de combustible, ayant une forme générale prismatique droite allongée suivant une direction axiale du faisceau suivant laquelle sont disposés les crayons, l'assemblage de combustible étant stocké sous eau dans une piscine de désactivation, à l'intérieur d'une alvéole d'un râtelier de stockage dans laquelle l'assemblage de combustible est placé avec son axe vertical et dans une position analogue à sa position dans le réacteur nucléaire en service, ce dispositif de nettoyage pouvant être mis en position de service très facilement et permettant de réaliser le nettoyage de l'assemblage de combustible placé dans le râtelier de stockage de manière simple.

Dans ce but, le dispositif selon l'invention comporte :
- un boîtier de forme générale tubulaire présentant une section de dimension supérieure à la section transversale de l'assemblage de combustible pour permettre le passage de l'assemblage de combustible à travers le boîtier,
- une plaque de base traversée par une ouverture d'une dimension supérieure à la dimension de la section transversale de l'assemblage de combustible sur laquelle repose le boîtier par une extrémité inférieure, autour de l'ouverture traversant la plaque de base,
- au moins deux plots de positionnement en saillie sous la plaque de base adaptés pour être engagés dans au moins deux alvéoles du râteliers de stockage entourant l'alvéole dans laquelle est placé l'assemblage de combustible,
- des moyens d'aspiration d'eau dans une partie inférieure du boîtier au-dessus de la plaque de base, et
- un moyen de levage de l'assemblage de combustible dans la direction verticale.

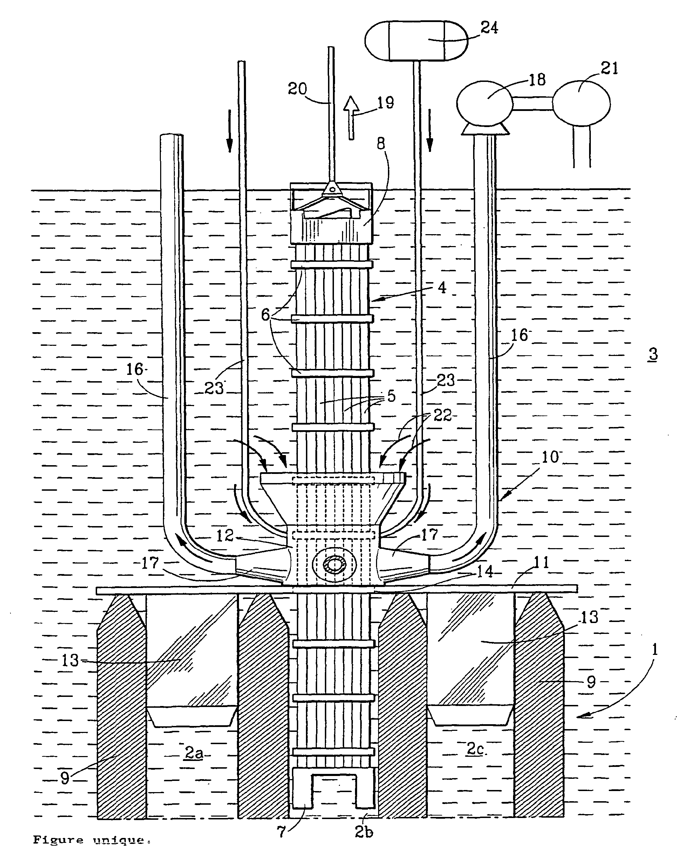

Afin de bien faire comprendre l'invention, on va maintenant décrire, à titre d'exemple, en se référant à la figure jointe en annexe, un mode de réalisation du procédé et du dispositif de nettoyage d'assemblages de combustible suivant l'invention.

La figure unique représente une vue en élévation et en coupe d'une zone d'une piscine de désactivation d'assemblages de combustible dans laquelle on effectue le nettoyage d'un assemblage de combustible en utilisant le procédé et le dispositif suivant l'invention.

Sur la figure unique, on a représenté une extrémité supérieure d'une partie d'un râtelier de stockage désignée de manière générale par le repère 1 et comportant des parois délimitant trois alvéoles voisines 2a, 2b et 2c de stockage d'assemblages de combustible.

Le râtelier de stockage 1 repose, par sa partie inférieure (non représentée), sur le fond d'une piscine de désactivation 3 remplie d'eau dans laquelle est plongée le râtelier 1 et les assemblages de combustible déposés dans le râtelier.

La partie d'extrémité supérieure du râtelier 1 est recouverte par une hauteur d'eau suffisante pour assurer la protection biologique d'opérateurs à des postes de travail situés au niveau supérieur de la piscine 3.

Le râtelier de stockage 1 est utilisé pour réaliser le stockage d'assemblages de combustible d'un réacteur nucléaire refroidi par de l'eau sous pression, tels que l'assemblage 4 sur lequel on effectue un nettoyage par le procédé de l'invention.

L'assemblage de combustible 4 est constitué par un faisceau de crayons de combustible 5 parallèles entre eux maintenus dans une ossature de l'assemblage de combustible comportant des grilles-entretoises 6 réparties suivant la longueur du faisceau et de l'assemblage de combustible dans la direction axiale du faisceau, les grilles-entretoises assurant le maintien transversal des crayons 5 suivant une disposition constituant un réseau régulier dans les plans transversaux perpendiculaires à la direction axiale longitudinale de l'assemblage de combustible 4.

L'ossature de l'assemblage de combustible comporte de plus un embout inférieur 7 et un embout supérieur 8 fixés respectivement à l'extrémité inférieure et à l'extrémité supérieure de l'assemblage de combustible ainsi que des tubes-guides qui sont disposés dans certaines positions dans le réseau des crayons de combustible 5 et qui constituent des éléments de liaison de l'ossature sur lesquels sont fixés les grilles-entretoises 6 et les embouts 7 et 8.

De manière générale, l'assemblage de combustible 4, qui est destiné à un réacteur nucléaire refroidi par de l'eau sous pression, présente une forme prismatique droite et une section transversale carrée dont le côté a une longueur voisine de 20 cm. La longueur axiale totale de l'assemblage de combustible est un peu supérieure à 4 m.

Le râtelier de stockage 1 délimite des alvéoles de stockage d'assemblages de combustible de forme prismatique droite à section carrée destinées à recevoir chacune un assemblage de combustible tel que l'assemblage de combustible 4.

Les parois verticales 9 du râtelier de stockage 1 délimitent entre elles des alvéoles dont les sections transversales carrées sont disposées suivant un réseau à mailles carrées, de sorte qu'une alvéole telle que 2b est entourée, suivant ses quatre faces, généralement, par quatre alvéoles telles que 2a et 2c disposées suivant deux rangées perpendiculaires entre elles.

Lorsque l'assemblage de combustible 4 est entièrement engagé à l'intérieur d'une alvéole de stockage telle que l'alvéole 2b, l'extrémité supérieure de son embout supérieur 8 se trouve en-dessous de la surface supérieure des parois verticales 9 du râtelier de stockage.

Pour la mise en oeuvre du procédé de nettoyage suivant l'invention sur un assemblage de combustible 4 contenu dans une alvéole telle que 2b, on met en place un dispositif de nettoyage désigné de manière générale par le repère 10 sur la partie supérieure du râtelier de stockage 1.

Le dispositif de nettoyage 10 comporte une plaque de base 11 sur la surface inférieure de laquelle sont fixés des plots de positionnement 13 en saillie sous la plaque 11.

Pour obtenir une très bonne stabilité du dispositif de nettoyage 10, on utilise généralement une plaque de base 11 comportant deux plots de positionnement 13 disposés de manière à pouvoir être engagés dans deux des quatre alvéoles disposées suivant deux rangées perpendiculaires entourant l'alvéole 2b dans laquelle est placé l'assemblage de combustible 4 sur lequel on réalise le nettoyage.

De manière générale, les plots de positionnement 13 peuvent présenter une section carrée sensiblement analogue à la section d'un assemblage de combustible ou une section circulaire inscrite dans la section carrée des alvéoles.

On peut utiliser un nombre quelconque de plots qui sont adaptés à la position et à la configuration des alvéoles de réception des assemblages de combustible.

La plaque de base 11 est traversée, dans sa partie centrale, par une ouverture 14, par exemple de forme carrée, permettant le passage d'un assemblage de combustible. Sur la surface supérieure de la plaque de base 11, au-dessus de l'ouverture traversante 14, est posé un boîtier d'aspiration 12 qui est généralement réalisé sous la forme d'une enveloppe tubulaire ouverte à ses deux extrémités.

L'ouverture de l'extrémité inférieure du boîtier d'aspiration 12 recouvre entièrement l'ouverture traversante 14 de la plaque de base 11. D'autre part, l'enveloppe tubulaire du boîtier 12 comporte une partie évasée de bas en haut, et présente une section suffisante pour permettre le passage d'un assemblage de combustible, de sorte que l'assemblage de combustible 4 peut traverser axialement le volume intérieur du boîtier 12, lorsqu'on le déplace dans la direction verticale et vers le haut. En outre, la partie évasée de l'enveloppe du boîtier 12 présente une section sensiblement supérieure à la section de l'assemblage de combustible, de sorte que, lors du levage de l'assemblage de combustible 4, comme représenté sur la figure, il subsiste autour de l'assemblage de combustible, à l'extrémité supérieure du boîtier 12, une ouverture de passage de l'eau de la piscine.

L'enveloppe du boîtier 12 est reliée, par des tubulures 17 et des conduites 16, à une ou plusieurs installations de pompage 18 placées au-dessus du niveau supérieur de la piscine 3. Les tubulures 17 débouchent dans la partie inférieure du boîtier d'aspiration 12, de sorte que les pompes 18 permettent d'aspirer l'eau de la piscine à la partie supérieure du boîtier 12, cette eau circulant ensuite à l'intérieur du boîtier, dans une direction générale verticale et de haut en bas.

Dans le cas d'un assemblage de combustible de forme prismatique droite à section carrée, on peut prévoir quatre lignes d'aspiration comportant chacune une tubulure 17 et une conduite 16 reliée à une unité d'aspiration et de pompage 18, les axes des tubulures 17 étant alignés deux à deux et disposés suivant deux directions à 90° suivant les médianes de la section de l'alvéole 2b dans laquelle est disposé l'assemblage de combustible dont on effectue le nettoyage.

Chacune des lignes d'aspiration comportant une tubulure 17 et une conduite 16 peut être reliée à une unité de pompage 18 qui lui est propre ou, au contraire, plusieurs lignes d'aspiration ou même l'ensemble des lignes d'aspiration peuvent être reliées à une unité de pompage et d'aspiration commune.

Pour réaliser le nettoyage de l'assemblage de combustible, on fixe l'embout supérieur 8 de l'assemblage de combustible à un moyen de levage 20 qui peut être un moyen de levage et de manutention des assemblage de combustible dans la piscine de désactivation 3 et on réalise le levage de l'assemblage de combustible dans la direction verticale correspondant à la direction axiale de l'assemblage de combustible, comme représenté de manière conventionnelle par la flèche 19.

La hauteur du boîtier d'aspiration 12 est sensiblement inférieure à la longueur de l'assemblage de combustible dans la direction axiale, de sorte qu'on réalise, à l'intérieur du boîtier, un nettoyage de l'assemblage de combustible tronçon par tronçon. Le levage de l'assemblage de combustible peut être réalisé en continu ou, au contraire, de manière discontinue, des tronçons successifs de l'assemblage de combustible étant placés successivement à l'intérieur du boîtier d'aspiration 12 dans lequel on réalise le nettoyage.

L'eau de la piscine, aspirée depuis la partie inférieure du boîtier d'aspiration 12, pénètre dans le boîtier par son ouverture supérieure à la périphérie de l'assemblage de combustible 4 qui est déplacé dans la direction verticale à l'intérieur du boîtier 12. L'eau de la piscine circule à l'intérieur du boîtier d'aspiration 12 dans une direction sensiblement verticale et de haut en bas et de manière à traverser les interstices entre les grilles et les crayons et entre les crayons de combustible de l'assemblage de combustible par exemple à partir des quatre faces de l'assemblage de combustible.

La circulation de l'eau de nettoyage à travers le tronçon d'assemblage de combustible disposé à l'intérieur du boîtier d'aspiration 12 est réalisée dans le sens inverse de la circulation de l'eau de refroidissement dans l'assemblage de combustible en position dans le réacteur nucléaire. Cette circulation en sens inverse de l'eau de nettoyage permet de détacher des débris qui ont pu être coincés dans des interstices de l'assemblage de combustible pendant le fonctionnement du réacteur nucléaire du fait que l'eau de refroidissement transporte des débris.

L'eau de nettoyage renfermant éventuellement des débris est récupérée par les dispositifs d'aspiration constitués par les tubulures 17, les conduits 16 et les pompes 18 pour être refoulée dans un ou plusieurs filtres 21 permettant de séparer les débris récupérés dans l'assemblage de combustible de l'eau qui est rejetée dans la piscine 3.

L'efficacité du nettoyage par une circulation d'eau à contre-courant de la circulation normale d'eau de refroidissement dans l'assemblage de combustible peut être accrue en injectant dans le flux d'eau entrant dans le boîtier 12, comme représenté par les flèches 22, un courant d'air comprimé ou encore de la carboglace formée par congélation de gaz carbonique. On crée ainsi des turbulences locales au voisinage des surfaces de l'assemblage de combustible balayées par l'eau et on favorise le décollement des particules, éventuellement adhérentes sur des parties de l'assemblage de combustible ou insérées dans des interstices entre les éléments de l'assemblage de combustible.

Pour réaliser l'injection d'air comprimé ou de carboglace dans le courant 22 d'eau de la piscine entrant dans le boîtier 12, on utilise des conduits d'injection 23 reliés à la partie d'entrée ou à la partie médiane du boîtier 12, par exemple sur quatre côtés du boîtier au-dessus des quatre tubulures d'aspiration 17.

A leur extrémité opposée au boîtier 12, les conduites d'injection 23 sont reliées à des réservoirs d'air comprimé 24 et/ou à des réservoirs de gaz carbonique associés à un système de réfrigération du gaz carbonique envoyé dans la conduite d'injection 23.

Le nettoyage de l'assemblage de combustible est réalisé en déplaçant l'assemblage de combustible dans la direction verticale, comme indiqué par la flèche 19, de manière à réaliser le balayage par les courants d'eau de nettoyage de toutes les parties de l'assemblage de combustible depuis son embout supérieur 8 jusqu'à son embout inférieur 7. Les courants d'eau de nettoyage permettent en particulier de décoller des débris coincés entre les crayons et les grilles-entretoises ou entre les crayons ou encore dans les embouts et plus particulièrement dans l'embout inférieur 7.

Après avoir effectué le nettoyage complet de l'assemblage de combustible, on redescend l'assemblage de combustible dans sa position de stockage à l'intérieur de l'alvéole 2b et on déplace l'ensemble de nettoyage 10 jusqu'à une nouvelle position de nettoyage d'un assemblage de combustible 4 contenu dans le râtelier 1.

On peut également réaliser le nettoyage des assemblages de combustible à poste fixe, l'ensemble de nettoyage 10 étant placé à demeure au-dessus d'une alvéole du râtelier de stockage 1 dans laquelle on amène successivement les assemblages de combustible à nettoyer.

Il est à remarquer que l'utilisation de plots 13 de fixation du dispositif de nettoyage d'une certaine longueur peut nécessiter de réaliser la mise en place des plots 13 dans des alvéoles ne contenant pas d'assemblage de combustible. Il est également possible d'utiliser des plots 13 venant s'encastrer dans la partie supérieure des alvéoles du râtelier de stockage au-dessus d'assemblages de combustible en position de stockage.

Dans tous les cas, le dispositif suivant l'invention permet de réaliser rapidement et sans difficulté un nettoyage efficace d'un assemblage de combustible irradié contenu dans un râtelier de stockage, à l'intérieur d'une piscine de désactivation.

L'invention ne se limite pas au mode de réalisation qui a été décrit.

C'est ainsi que le boîtier 12 et les moyens d'aspiration de l'eau de la piscine à l'intérieur du boîtier 12 peuvent présenter des formes de réalisation différentes de celles qui ont été décrites.

On peut introduire dans l'eau de nettoyage tout additif permettant d'augmenter l'efficacité du nettoyage.

L'invention s'applique de manière générale au nettoyage de tout assemblage de combustible irradié déchargé d'un réacteur refroidi par de l'eau légère.

## Revendications

1. Dispositif de nettoyage d'un assemblage de combustible (4) d'un réacteur nucléaire constitué par un faisceau de crayons de combustible (5) maintenus dans une disposition parallèle entre eux à l'intérieur d'une ossature (6, 7, 8) de l'assemblage de combustible, ayant une forme générale prismatique droite allongée suivant une direction axiale du faisceau suivant laquelle sont disposés les crayons (5), l'assemblage de combustible étant stocké sous eau dans une piscine de désactivation (3), à l'intérieur d'une alvéole (2b) d'un râtelier de stockage (1) dans laquelle l'assemblage de combustible (4) est placé avec son axe vertical et dans une position analogue à sa position dans le réacteur nucléaire en service, **caractérisé en ce qu'**il comporte :
- un boîtier (12) de forme générale tubulaire présentant une section de dimension supérieure à la section transversale de l'assemblage de combustible (4) pour permettre le passage de l'assemblage de combustible (4) à travers le boîtier,
- une plaque de base (11) traversée par une ouverture (14) d'une dimension supérieure à la dimension de la section transversale de l'assemblage de combustible (4), sur laquelle repose le boîtier (12) par une extrémité inférieure, autour de l'ouverture (14) traversant la plaque de base (11),
- au moins deux plots (13) de positionnement en saillie sous la plaque de base adaptés pour être engagés dans au moins deux alvéoles du râtelier de stockage entourant l'alvéole (2b) dans laquelle est placé l'assemblage de combustible (4),
- des moyens d'aspiration d'eau (16-18) dans une partie inférieure du boîtier (12) au-dessus de la plaque de base (11), et
- un moyen de levage (20) de l'assemblage de combustible (4) dans la direction verticale (19).

2. Dispositif suivant la revendication 1, **caractérisé en ce que** des moyens (23, 24) d'injection d'une substance dans le boîtier (12) sont reliés au boîtier (12), au-dessus d'une zone d'aspiration (17) d'eau de la piscine (3) dans le boîtier (12).

3. Dispositif suivant l'une quelconque des revendications 1 et 2, **caractérisé en ce que** les moyens d'aspiration (16-18) d'eau dans le boîtier (12) comportent au moins un ensemble d'aspiration comportant une tubulure (17) débouchant dans une partie inférieure du boîtier (12), une unité d'aspiration (18) telle qu'une pompe placée au-dessus du niveau supérieur de la piscine (3) et une conduite (16) joignant une partie d'aspiration de la pompe (18) à la tubulure (17).

4. Dispositif suivant la revendication 3, dans le cas d'un assemblage (4) ayant une section transversale de forme carrée, **caractérisé en ce que** les moyens d'aspiration (16-18) comportent quatre ensembles d'aspiration comportant chacun une tubulure d'aspiration débouchant dans le boîtier (12) en vis-à-vis d'une face de l'assemblage (4) de forme prismatique à section carrée.

## Claims

1. Device for cleaning a nuclear reactor fuel assembly (4) consisting of a bundle of fuel rods (5) held in parallel arrangements to one another inside a framework (6, 7, 8) of the fuel assembly, of a generally straight prismatic shape elongated in an axial direction of the bundle in which the rods (5) have been arranged, the fuel assembly being stored under water in a deactivauon pool (3), within a cell (2b) of a stowage basket (1) in which the fuel assembly (4) is placed with its axis vertical and in a position analogous to its position in the nuclear reactor during operation, **characterised in that** it comprises:
a generally tubular housing (12) having a section which is larger in size than the cross-section of the fuel assembly (4), in order to allow the fuel assembly (4) to pass through the housing,
a base plate (11) pierced by an opening (14) which is larger in size than the cross-section of the fuel assembly (4), on which the housing (12) is supported at its lower end, around the opening (14) provided in the base plate (11),
at least two positioning studs (13) projecting underneath the base plate and adapted to engage in at least two cells of the stowage basket surrounding the cell (2b) in which the fuel assembly (4) is placed,
means (16-18) for sucking in water in a lower part of the housing (12) above the base plate (II) and
means (20) for lifting the fuel assembly (4) in the vertical direction.

2. Device according to claim 1, **characterised in that** means (23, 24) for injecting a substance into the housing (12) are connected to the housing (12), above a zone (17) for sucking water from the pool (3) into the housing (12).

3. Device according to any one of claims 1 and 2, **characterised in that** the means (16-18) for sucking water into the housing (12) comprise at least one suction assembly comprising a tube (17) opening into a lower part of the housing (12), a suction unit (18) such as a pump placed above the upper level of the pool (3) and a pipe (16) connecting a suction member of the pump (18) to the tube (17).

4. Device according to claim 3, in the case of an assembly (4) of square cross-section, **characterised in that** the suction means (16-18) comprise four suction assemblies each having a suction tube opening into the housing (12) facing a side of the assembly (4) which is prismatic and square in cross-section.

## Patentansprüche

1. Vorrichtung zur Reinigung eines Kemreaktor-Brennelements (4), gebildet durch ein Bündel von Brennstäben (5), in zueinander parallelen Stellungen gehalten im Innern eines Brennelement-Traggestells (6, 7, 8), mit einer in der axialen Richtung der Brennstäbe (5) generell geradlinigen prismatischen Form, wobei das Brennelement in einem Entaktivierungsbecken (3) unter Wasser gelagert wird, in einer Zelle (2b) eines Lagerungsgestells (1), in der das Brennelement (4) mit seiner Vertikalachse in einer seiner Betriebsposition in dem Kemreaktor entsprechenden Position angeordnet wird,
**dadurch gekennzeichnet, dass** sie umfasst:
- ein generell rohrförmiges Gehäuse (12), dessen Querschnitt bzw. Innenquerschnitt größer ist als der Querschnitt des Brennelements (4), so dass das Brennelement (4) das Gehäuse durchqueren kann,
- eine Grundplatte (11), durchbrochen von einer Öffnung (14) mit einer Abmessung, die größer ist als die Abmessung des Querschnitts des Brennelements (4), auf der das Gehäuse (12) mit einem unteren Ende ruht, um die die Grundplatte (11) durchbrechende Öffnung (14) herum,
- wenigstens zwei Positionierungsstücke (13) unter der Grundplatte, so konzipiert, dass sie in wenigstens zwei der Zelle (2b) benachbarte Zellen des Lagerungsgestells passen, in dem das Brennelement (4) angeordnet wird,
- Wasserabsaugeinrichtungen (16-18) in einem unteren Teil des Gehäuses (12), über der Grundplatte (11), und
- eine in der vertikalen Richtung (19) arbeitende Hebeeinrichtung (20) für das Brennelement (4).

2. Vorrichtung nach Anspruch 1, **dadurch gekennzeichnet, dass** Einrichtungen (23, 24) zum Einspritzen einer Substanz in das Gehäuse (12) mit dem Gehäuse (12) verbunden sind, über einer Absaugzone (17) des Wassers des Beckens (3) aus dem Gehäuse (12).

3. Vorrichtung nach einem der Ansprüche 1 und 2, **dadurch gekennzeichnet, dass** die Einrichtungen (16-18) zum Absaugen von Wasser aus dem Gehäuse (12) wenigstens ein Absaugsystem mit einem Stutzen (17) umfassen, der ihn einem unteren Teil des Gehäuses (12) mündet, wobei eine Absaugeinheit (18) wie etwa eine Pumpe sich über der Wasseroberfläche des Beckens (3) befindet und eine Leitung (16) einen Ansaugteil der Pumpe (18) mit dem Stutzen (17) verbindet.

4. Vorrichtung nach Anspruch 3 im Falle eines Brennelements (4) mit einem quadratischen Querschnitt, **dadurch gekennzeichnet, dass** die Absaugeinrichtungen (16-18) vier Absaugeinrichtungen umfassen, von denen jede einen Absaugstutzen aufweist, der in dem Gehäuse (12) gegenüber einer Seite des prismaförmigen Brennelements (4) mit quadratischem Querschnitt mündet.
